(19) Europäisches Patentamt
European Patent Office
Office européen des brevets

(11) **EP 3 974 865 A1**

(12) **EUROPEAN PATENT APPLICATION**

(43) Date of publication:
**30.03.2022 Bulletin 2022/13**

(51) International Patent Classification (IPC):
***G01S 7/4861*** (2020.01)

(21) Application number: **21196352.5**

(22) Date of filing: **13.09.2021**

(52) Cooperative Patent Classification (CPC):
**G01S 7/4865; G01S 7/4861**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2020 US 202017030733**

(71) Applicant: **NXP B.V.**
**5656 AG Eindhoven (NL)**

(72) Inventors:
• **BOLATKALE, Muhammed**
  **5656AG Eindhoven (NL)**
• **SON, Dongjin**
  **5656AG Eindhoven (NL)**
• **KULESH, Maxim**
  **5656AG Eindhoven (NL)**

(74) Representative: **Hardingham, Christopher Mark**
**NXP Semiconductors**
**Intellectual Property Group**
**Abbey House**
**25 Clarendon Road**
**Redhill, Surrey RH1 1QZ (GB)**

(54) **PHOTON-BASED TARGET DETECTION USING COARSE AND FINE BINNING**

(57) Exemplary aspects of the present disclosure involve a SPAD receiver having circuitry for photon detection and having a plurality TDCs (time-to-digital converters) to detect multiple photons. Such circuitry may be set to accumulate photon counts over relatively coarse time ranges. In such accumulation of photons in relatively coarse time ranges, photon counts may be binned for each time range. Possible targets may then be identified by examination of the bins. Upon identification of the possible targets, a plurality of TDCs may be used over a more refined time ranges such as the time ranges corresponding to the identified possible target or targets.

**FIG. 2**

**Description**

OVERVIEW

In various examples, aspects of the present disclosure are directed to detecting the position of objects in target areas by use of a receiver with single-photon avalanche photodiode (SPAD) technology.

SPAD technology, as well as the related field of Lidar (light detection and ranging), play increasingly important roles in many technology areas. One such area is in the field of range detection as may be applied for sensing the relative movement of objects. In vehicular applications, this type of detection may be used for providing assistance in connection with both non-autonomous driving and, due to high range and angular resolutions, autonomous driving. SPAD is an advantageous receiver technology for automotive Lidar thanks to its unique properties such as high sensitivity down to a single photon, high time resolution and high array resolution which may be enabled by planar device structure (e.g., CMOS-based SPAD).

SPAD also facilitates effective techniques for time-of-flight measurements for short-range and low-noise environment applications, such as fluorescence lifetime microscopy. Adapting SPAD for a long-range and/or high noise environment, in addition to optical bandpass filter and limited field-of-view, requires comprehensive range-gating technique due to the blocking of the signal by noise-induced detections, for example, sunlight photons. In such environments with constant photon arrival rates, for example, the probability of photon detection drops exponentially with the time, referred to as pile-up effect.

A SPAD based receiver has the potential to form a large array, achieving a wide field of view (FoV) with high image resolution. In a photon-starved application, for example, scaling does not increase the photon counts proportionally. Thus, SPAD events share timestamping resources in the interest of silicon area reduction. In contrast, high ambient noise condition enforces fully parallel architecture to maximize photon detections. Consequently, throughput and power consumption increase proportional to the activity rate.

These and other matters have presented challenges to efficiencies of realizing effective use of SPAD over longer ranges, with enhanced accuracy and/or in higher noise environments, for a variety of applications.

SUMMARY

Various example embodiments are directed to issues such as those addressed above and/or others which may become apparent from the following disclosure concerning operation of a SPAD receiver such as may be used in a Lidar (Light Detection and Ranging) system.

In certain example embodiments, aspects of the present disclosure involve a SPAD receiver having circuitry for photon detection and having a plurality TDCs (time-to-digital converters) to detect multiple photons. Such circuitry may be set to provide relatively coarse timestamps of the detected photons, which are accumulated to construct a coarse-bin histogram.. In such circuitry, bin accumulated photon (or in some instances avalanche triggering) counts may occur over relatively coarse times for the associated time ranges. Possible targets may then be identified by examination of the photon count distribution over the bins. Upon identification of the possible target(s), a plurality of TDCs may be used to accumulate detected photon counts over more fine time ranges (relative to the coarse mode) such as the time ranges corresponding to identified targets.

In more-specific related examples, in one frame TDCs may be gated within the target bins provided by an integrated coarse histogram. Such an integrated coarse histogram may be built with additional timestamping device (e.g., counters) running in the background. Further, separation and simultaneity of the coarse and fine histogramming may be used to reduce loss in total integration time, thereby reducing loss in terms of signal to noise ratio. Using such specific aspects, with slightly additional hardware (e.g., counter logic circuitry and coarse histogram memory), the TDCs may be gated within the target windows with appropriate operational numbers, thereby reducing or minimizing noise counts in fine-histogram construction. Alternatively, the least-significant bit (LSB) size of the TDCs may be changed at the cost of frame rates or integration time (or data acquisition time) of the fine resolution histogram construction due to the time consumed to generate the coarse target bins.

Another example involves operating a SPAD receiver for Lidar (Light Detection and Ranging) detection of at least one object that is among one or more possible target bins associated with binning and identification. This example may further include operating the SPAD receiver for a more refined Lidar detection of the at least one object while using the plurality of TDCs to detect possible targets.

Another specific example involves a method for accumulating detected photon counts in an array of bins in response to being detected. Also, such a method may involve operating the SPAD receiver for Lidar detection of at least one object in an environment that causes at least one of the bins in the array of bins to be associated with the at least one object. Similarly, at least one other of the bins, in the array of bins, may be associated with noise.

The above discussion/summary is not intended to describe each embodiment or every implementation of the present disclosure. The figures and detailed description that follow also exemplify various embodiments.

BRIEF DESCRIPTION OF FIGURES

Various example embodiments may be more completely understood in consideration of the following detailed description in connection with the accompanying drawings, in which certain aspects may stand alone and/or also may relate to and be used in connection with other aspects. These accompanying drawings include:

FIG. 1A is a high-level diagram illustrating an example of a SPAD based light and range detection system, in accordance with the present disclosure;

FIG. 1B is a flow chart illustrating an exemplary set of activities and data flow for a SPAD based light and range detection system, in accordance with the present disclosure;

FIG. 2 is a more detailed high-level diagram illustrating an example of a SPAD based light and range detection system, in accordance with the present disclosure;

FIG. 3 is a signal flow diagram illustrating an exemplary set of activities and data flow for an adaptive Lidar system detection system, in accordance with the present disclosure;

FIG. 4A is a high-level diagram illustrating an example of an adaptive TDC ranging gating, in accordance with the present disclosure;

FIG. 4B is an example of coarse per-pixel histograms created using the an adaptive TDC ranging gating of FIG. 4A , in accordance with the present disclosure;

FIG. 4C is an example of an integrated coarse histogram created from pixel data as illustrated in FIG. 4B, in accordance with the present disclosure;

FIG. 5A is an example histogram depicting two targets, each at a different distance, in accordance with the present disclosure;

FIG. 5B is an example integrated coarse histogram created from pixel data as illustrated in FIG. 5A, in accordance with the present disclosure; and

FIG. 5C is a final histogram after adaptive range gating, in accordance with the present disclosure.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

DETAILED DESCRIPTION

Aspects of the present disclosure are believed to be applicable to a variety of different types of apparatuses, systems and methods involving the use of a SPAD (Single Photon Avalanche Diode) receiver system to characterize distances to a target and as well as a photon count to characterize signal-to-noise ratio (SNR) of the receiver signal. In certain implementations, aspects of the present disclosure have been shown to be beneficial when used in the context of distance ranging and signal strength determination. This may include areas such as robot navigation, perimeter security, or cartography. In some embodiments, such a SPAD receiver system may be beneficial in a Lidar (light detection and ranging) system such as implementations used on autonomous vehicles. As a specific example, such a system may be used to quantify 3D information about a target environment such as the roadway in front of a car, such as pedestrian locations, approaching vehicles, etc. While not necessarily so limited, various aspects may be appreciated through the following discussion of non-limiting examples which use such exemplary contexts.

Accordingly, in the following description various specific details are set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference numerals may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

According to a specific example of the present disclosure, embodiments are directed to or involve a method wherein a SPAD receiver may include a SPAD circuit used to detect incoming photons and using multiple photon detections while using, for example, a plurality of TDCs (time-to-digital converters). This exemplary approach may also involve accumulating (counting) detected photons over relatively coarse ranges. Accumulation (counting) of photons may be computed via a plurality of pixels. Such pixels may be within a pixel group (per pixel, row, per column, etc.). The accumulated photon may be binned according to the associated relative coarse time range. From such bins, one or more possible targets bins may be identified.

Also, as with the previous example, range information associated with detected target bin(s) may be used, and a plurality of TDCs may be used so as to accumulate detected photons over one or more relatively fine time ranges. Such ranges may correspond to the identified one or more target bins for accurate identification indications of the target object(s).

In other specific examples, the present disclosure is directed to a method, wherein operation of the SPAD receiver may be for Lidar (Light Detection and Ranging) detection of at least one object that is among the one or more possible target bins associated with the steps or activities of binning and identification as discussed in connection with other examples herein. Further, the SPAD receiver may be operated for more refined Lidar detection of the object(s) while using the TDCs and counting logic circuitry (or hardware) as also described herein.

In yet another specific example, the present disclosure concerns embodiments directed to or involving methodology for accumulating detected photons counts in an array of bins in response to being detected. Also, such methodology may involve operating the SPAD receiver for Lidar detection of at least one object in an environment that causes at least one of the bins in the array of bins to be associated with one or more of the target objects. Similarly, at least one other of the bins, among the array of bins, may be associated with noise (e.g., sunlight or interfering light from an unintended source). Note that the background noise may be measured by a SPAD array or auxiliary ambient light sensor and eth SPAD receiver may be calibrated, by way of threshold-detection settings in the logic processing, to ignore or discard such noise.

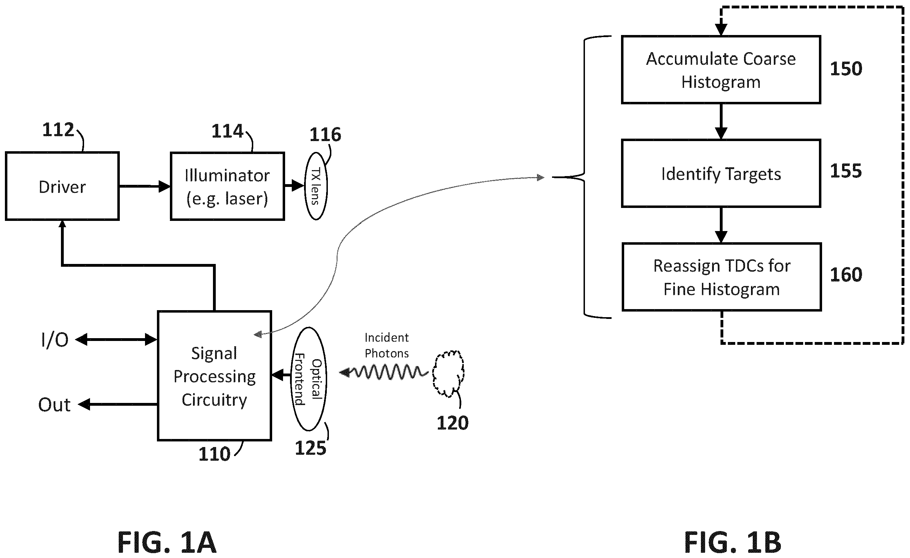

Turning now to the drawings, FIG. 1A illustrates an example of a SPAD-based photon detection device and/or system including a transmitter (driver-illuminator-lens) arrangement and a SPAD receiver arrangement, as may be implemented in connection with a Lidar apparatus. In this example, both arrangements are integrated and controlled by a signal processing circuitry 120. The transmitter arrangement includes an optical driver 122 which may be controlled via the signal processing circuitry 120. The transmitter arrangement also includes an illuminator 124 to transmit a pulsed optical (light) output, and further includes a transmitter lens 126 to focus the light towards or at a target area including an object or objects (depicted as 128 and being so positioned and not to scale for discussion purposes). The illuminator 124 may be (optionally) powered by the driver circuit 122 which is in turn controlled by the signal processing circuitry 120 as may be implemented at a more detailed level (not shown) via a microcontroller circuitry with clock driver and memory circuitry. A portion of the photons transmitted by the illuminator 124 may be reflected by the object 128 in the target area. These incident photons may pass through an optical frontend 130 (e.g., including a lens and light bandpass filter) to respectively focus and filter the returned photons for processing by the signal processing circuitry 120. The signal processing circuitry 120 may also control the driver 122 and such signal processing circuitry 120 may also be implemented to control (and/or be included as an integration involving) a set of more specific discrete light-signal processing circuit blocks. In one example, such circuit blocks may include one or more of a SPAD receiver array, a SPAD gating circuit, a TDC array, a photon counter, an adder or accumulator, and histogram circuitry.

FIG. 1B illustrates an example of one way, in the form of a high-level flowchart, that a portion of the measurement and control tasks of the signal processing circuitry 120 may be carried out. The flowchart of FIG. 1B shows the task of accumulating photon counts 150 ("accumulate coarse histogram") to generate a coarse histogram. Upon completion of the coarse-histogram generation, one or more targets may be identified 155 ("identify targets") by comparing bin counts to an identified noise level count. Based on the identification of target bins, the plurality of TDC may be reassigned (as at block 160 "reassign TDCs for fine histogram") to allow for the creation of a fine histogram which provides a more-detailed assessment. These aspects in the flowchart (as at blocks 150, 155 and 160) may be repeated continuously so as to rediscover existing, or new, targets in a given target area or field(s) of view.

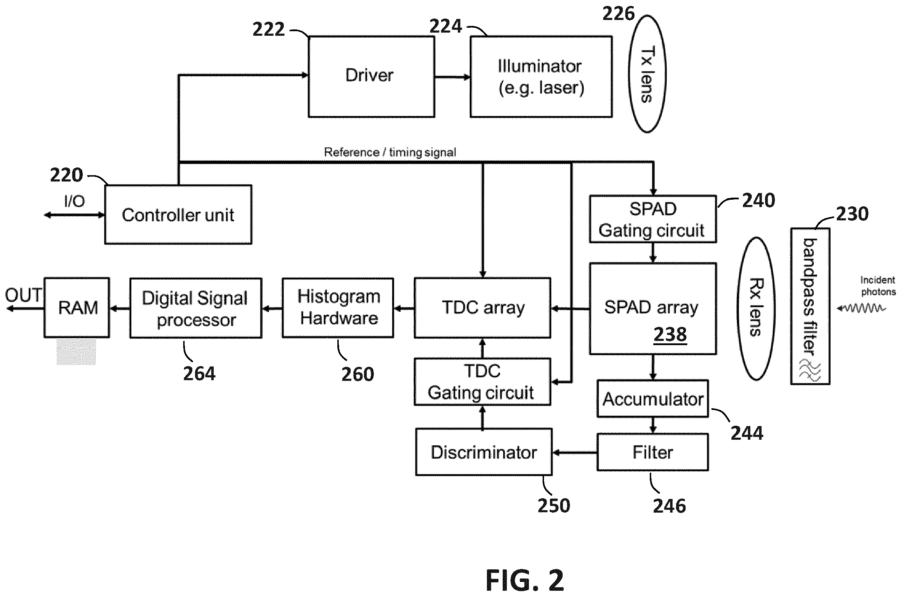

FIG. 2 illustrates a more detailed example of a SPAD based light and range detection system for possible use in an automotive-installed or automotive-applicable Lidar system. In this example, a controller (e.g., microcomputer) 220 may be used for synchronizing and orchestrating photon timing and processing in both directions, and while cooperating with a transmitter. The transmitter has an arrangement of circuits or circuit blocks including: an optical driver 222 responsive to control from the controller 220, an illuminator 224 to transmit a pulsed optical (light) output, and a transmitter lens 226 to focus the light towards or at a target area including an object or objects (not shown). The receiving side of the system in FIG. 2 may include an optical frontend circuit having a filter 230 and lens 234. From the optical frontend circuit, received light is received by the SPAD array 238. The SPAD array 238 may be a 2-dimenssional array of photon detectors with the gating (detecting) time interval, for each of a plurality of photon detectors, controlled by the SPAD gating circuit 240. One or more SPADs may be used to provide or form a pixel. Multiple pixels (e.g. row, column, array, etc.) may be grouped and share the time-stamping resources. Each pixel group may share one or more TDCs 258 by way of column/row decoding, multiplexing, etc. The TDC array block 258 may provide the time interval between the reference and the photon detection. Although the TDC is a suitable time measurement circuit, alternatives may be used such as a Time-to-Analog Converter (TAC) coupled with an Analog-to-Digital Converter (ADC), and/or with such a TDC operating in both forward and reverse modes (e.g.,. forward mode implying the serving of a reference signal as START and SPAD detection as END signals, and vice versa in reverse mode).

Continuing with the description of FIG. 2, the SPAD gating circuit 240 is used for range-gating the SPAD array 238. Each SPAD may be gated individually where the gating scheme dictates synchronicity of one or multiple pixels. The SPAD gating circuit 240 may include quenching, recharging and switching circuits. The TDC gating circuit 254 may be used for time gating shared TDCs 258 per pixel group and may be configured to be adaptive to the ambient light intensity. The accumulator 244 may be used for building an integrated coarse histogram for each pixel group. The integrated photon counts correspond to the total photon detections by the pixel group, and the accumulator 244 may be implemented by an array of counters. Alternatively, a coarse TDC and memory block may be implemented. In one embodiment, the accumulator may update the coarse histograms, using histogram circuitry (or "hardware") 260, with every frame rate. In another embodiment, the update frequency may be increased by a filter implementation 246 (e.g. infinite impulse response - IIR). The discriminator 250 may be used for coarse target bin(s) identification for each pixel group. The discriminator 250 may compare ambient noise counts to the integrated histogram. Histogram bins measuring above the background noise counts may be regarded as the target bins. Background noise may be measured by the SPAD array or an auxiliary ambient light sensor. In one embodiment, the discriminator 250 outputs the binary code for each bin, gating the shared TDCs synchronously. In another embodiment, the number of active TDCs per bin may differ for power efficiency. A lookup table can be implemented to translate the photon detection rate to optimal active TDC numbers. The discriminator unit 250 also implements theoretical maximum counts per bin to define the dynamic range and to detect any jammer. The stored coarse histogram may allow for on-board early jammer detection. The digital processing circuitry 264 and the memory circuit 268 may be used for calculation of distance to target, among other items.

As another related feature which may be optionally used in connection with the example embodiments of the present disclosure, a plurality of separate blocks as in FIG. 2 may be integrated into a single form-factor (e.g., SPAD array 238 and gating circuit 240 might be integrated into a single front-end chip). In one such example embodiment, the synchronous SPAD gating technique may be implemented for simplicity as shown in FIG. 2. In another example embodiment, another technique may be implemented (e.g., time-interleaved synchronous, late-locking Geiger mode (reverse-biased p-n junction mode) or asynchronously-operated circuitry). In such cases, the reference clock for SPAD 238 and TDC array 258 may vary.

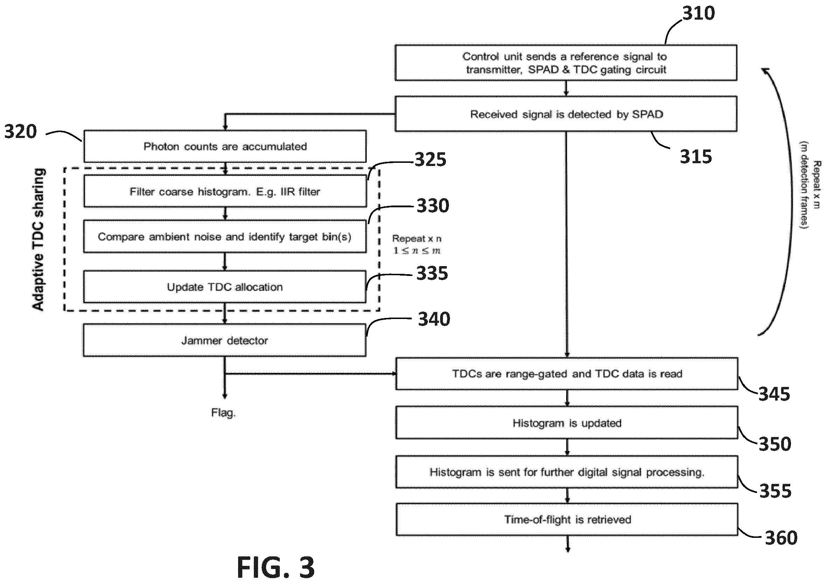

FIG. 3 a signal flow diagram illustrating an exemplary set of activities and data flow for an adaptive Lidar system. In this example, the signal flow covers one frame for a single TDC sharing pixel group (one or more of a plurality of SPADs 238 sharing one or more of a plurality of TDCs 258). The first block of the signal flow 310 ("Control unit sends a reference signal to transmitter, SPAD and TDC gating circuit") involves the controller unit (e.g., a microcomputer or other logic circuitry such as a semi-programmable logic circuit) sending a reference signal to the transmitter and gating circuits to synchronize the time origin. Upon photon detection as at block 315 ("received signal is detected by SPAD"), a TDC may record the time interval between the reference and photon detections as at block 345 ("TDCs are range-gated and TDC data is read"). Also, the histogram may be updated as at block 350 ("Histogram is updated") with the new photon count data and then be sent for further digital signal processing as at block 355 ("Histogram is sent for further digital signal processing"). The time-of-flight information is also retrieved as depicted at block 360 ("Time-of-flight is retrieved"). In parallel, photon counts within the pixel groups may be coarsely accumulated 320 ("Photon accounts are accumulated") and also, in some embodiments, the coarse histogram may be filtered as at block 325 ("Filter course histogram e.g. IIR filter")_. Then a discriminator may compare the accumulated counts to the ambient noise counts so as to identify the target bin(s) as depicted at 330 ("Compare ambient noise and identify target bin(s)"). Accordingly, an appropriate number of TDCs may be allocated for each bin by means of range-gating TDCs 335 ("Update TDC allocation"). In one embodiment, the shared TDCs may be synchronously gated. In another embodiment, the active TDC numbers may vary for each time bin. Any bin reaching the theoretically maximum photon counts may be regarded as a jammer 340 ("Jammer detector") and, optionally, timestamps need not be recorded. The example adaptive TDC range-gating scheme may update after multiple frames, with every frame, or more frequently.

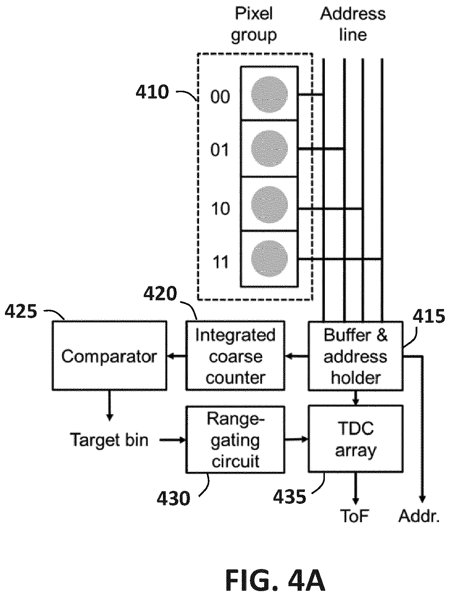

An example implementation of an adaptive TDC range gating and target bin identification system is illustrated in FIG. 4A. In this example embodiment, a pixel group 410 includes four single-SPAD pixels. Each pixel is connected to TDC array 435 via address lines through a buffer and address holder 415. An integrated coarse counter 420 integrates photon counts of the four pixels in a coarse manner to construct a histogram. Further, separate time-stamping hardware running in the background may be used to provide coarse measurements and histogram construction and, in parallel, the fine time-stamping TDC may be running. A comparator block 425 identifies target bins and produces the target bin vector. Also, the range gating circuit 430 may use target bin information to adjust gating in the TDC array 435.

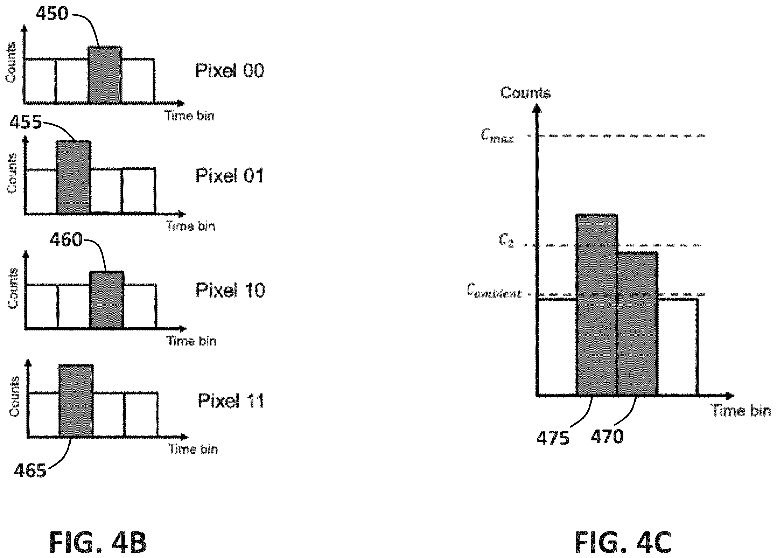

The example of FIG. 4B shows a coarse histogram including, solely for purposes of discussion in connection with this example, four bins. In this example, two pixels are arranged for detecting a target in the second coarse bin (as at blocks 455 and 465) and another two pixels for detecting a target in the third bin (at 450 and 460). The lower photon counts in the third bin (at 450 and 460) with respect to the second bin (455 and 465) which may reflect a weaker target-return signal being associated with an increased distance and assuming equal target reflectivity. Note that in this example, the pixel group consists of four pixels, and in this context illustrates a per-pixel coarse histogram which would not typically be implemented, but is presented here solely for illustration purposes.

In this specific example and as further shown in connection with the integrated coarse histogram of FIG. 4C, the comparator may compare an ambient noise level, $C_{ambient}$, with the coarse histogram and identify the second bin 475 and the third bin 470 as target bins. Additionally, the numbers of TDCs to be used in this regard may be set forth by comparing with one or more thresholds, $C_i$ where $i$ is a positive integer and indicates the number of TDCs being used (as may vary depending, for example, on a given design and Lidar application). For example, $C_2$ would indicate two TDCs being used. The photon counts, represented by the bin heights, may also be compared with a theoretical maximum, $c_{max}$. If photon counts exceed $c_{max}$, it may be assumed a jammer is affecting the pixel. Using the count data from each of a plurality of bins, the comparator may compute (e.g., calculate, lookup, etc.) and output a target bin vector. For example, in this specific example embodiment having four bins and the levels as shown in FIG. 4C, the target bin vector may be:

$$V_{target} = \left\{ \mathbf{0, 2, 1, 0} \right\}$$

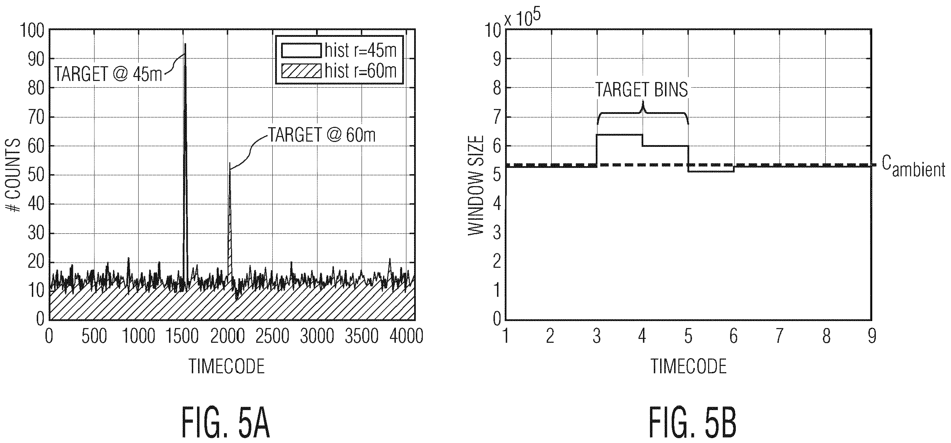

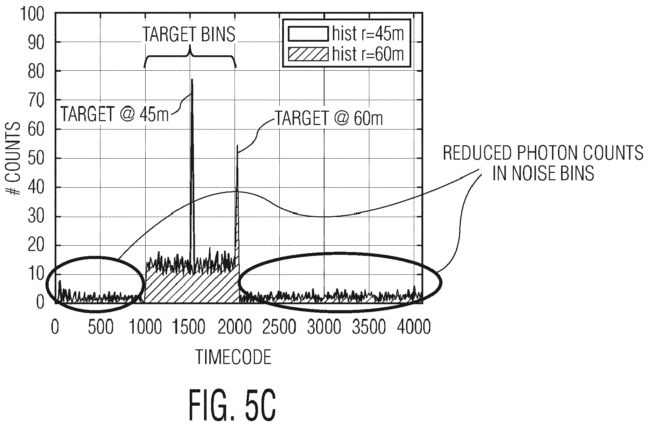

FIGs. 5A, 5B and 5C demonstrate the effect of adaptive TDC range-gating on a final histogram. In connection with these figures, an example simulation is based on a scenario (e.g., using customer-provided specifications for an optical system in an automobile-related application, using related transmitter and SPAD receiver specifications, etc.) with high background noise. FIG. 5A illustrates an example histogram with two pixels, each detecting target objects at different distances.

FIG. 5B illustrates an example that is related to FIG. 5A, wherein an integrated coarse histogram of 128 pixels is presented. In this example, 64 pixels are illustrated detecting a target object at 45m (forty-five meters) and the other half of the pixel set are shown detecting at 60m, all based on the above methodology. The integrated photon counts may be compared with the ambient noise intensity 530 to identify the target bins. The elements of the target bin vector, which indicates the required number of TDCs for each bin, is computed by the comparator 425 as, for example:

$$V_{target} = \{1, 1, 32, 32, 1, 1, 1, 1\}$$

wherein in this and other examples each parenthetical element may be a whole number.

FIG. 5C exemplifies a final histogram, for the scenario illustrated in FIG. 5A, as shown after an adaptive TDC range-gating scheme is applied. The time-stamps in noise (non-target) bins are primarily discarded by operating only one TDC in each bin (which may significantly reduce throughput. In such detailed experimentation, reduced signal photon counts seen at 45m target are due to 32 TDCs allocation for power efficiency. Activation of 64 TDCs may be to accommodate all detections which may be useful to retain sought signal-to-noise ratios (SNR).

According to another specific example, the present disclosure concerns embodiments involving methods wherein binning and identifying one or more possible target bins, as associated with the detected photon counts accumulated over the relatively coarse time ranges, includes discarding or ignoring the other bin or bins in the array of bins which may be associated with noise such as sunlight.

In yet another specific example of the instant disclosure, embodiments are directed to or involve a method wherein the TDCs are used in order to accumulate detected photon counts, over one or more relatively fine time ranges, and this may include allocating the one or more relatively fine time ranges for a plurality of the TDCs. These ranges may be selectively based on the steps of binning and identifying one or more possible target bins. Further, the targets bins may be associated with the detected photon counts accumulated over the relatively coarse time ranges. The allocation among the TDCs, for relatively fine time ranges technique, may alleviate two multiple issues including, for example, limited time-stamping capability in a TDC sharing architecture; and/or high throughput in a per-pixel TDC architecture. The integrated coarse histogram-based data preselection may enable effective TDC allocation at the target bins. Thus, noise induced time-stamping may be reduced, hence throughput may be reduced and SNR may be retained.

In certain more specific examples, operating the SPAD receiver may include a plurality of TDCs with pixel groups covering a field of view. Such pixel groups may be coupled to a bank of the plurality of TDCs to mitigate or prevent a blind spot in the field of view.

Another more specific example is directed to a method involving storing data associated with the detected photon counts as accumulated over the relatively coarse time ranges, in a coarse histogram. Filtering the histogram data may also be used with this example to identify a possibly-changing bin among the one or more possible target bins.

Consistent with above aspects, yet other detailed examples involve a method of operating the SPAD receiver with a step that includes updating the coarse histogram in real time. This in real-time updating may be implemented to facilitate maintaining the system frame rate as detected photons are processed by the receiver's circuitry.

Another detailed example involves a method that includes using the SPAD receiver to detect jamming. As described previously, any coarse histogram bin reaching the theoretically maximum photon counts may be regarded as a jamming occurrence or situation.

Other specific examples, each relating and useful in combination with one or more of the above-discussed examples, are directed to ways in which bottlenecking in connection with the processing of the detected photons may be avoided. In one such example, the SPAD-based receiver includes circuitry configured for Lidar detection of at least one object (among one or more possible target bins associated with the binning and identification) and circuitry for more refined Lidar detection of the object or objects while using the plurality of TDCs and in response to the TDCs being used. In another such example, the receiver includes such Lidar detection circuitry and also memory circuitry to accumulate detected photon counts in an array of bins; the Lidar detection is to detect the object or objects in an environment that causes at least one of the bins in the array of bins to be associated with the at least one object and at least one other of the bins in the array to be associated with noise (such as extraneous light as may be caused by the sun or an artificial source). In other such examples, during operation of the receiver, the plurality of TDCs are used to accumulate detected photon counts over one or more relatively fine time ranges in order to allocate the one or more relatively fine time ranges for the plurality of TDCs, and/or the receiver includes data processing circuitry is to associate the plurality of TDCs with pixel groups covering a field of view, wherein each of the pixel groups is coupled to a bank of the plurality of TDCs to mitigate or prevent a blind spot in the field of view. In yet further related examples, the receiver includes logic circuitry to discriminate among the detected photons before using the plurality of TDCs to mitigate or prevent an overload of detected photons (e.g., due to sunlight) being processed by the receiver.

As examples, the Specification describes and/or illustrates aspects useful for implementing the claimed disclosure by way of various circuits or circuitry which may be illustrated as or using terms such as blocks, modules, device, system, unit, controller, and/or other circuit-type depictions (e.g., reference numerals 220 and 240 of Fig. 2 depict a block/module as described herein). Such circuits or circuitry are used together with other elements to exemplify how certain embodiments may be carried out in the form or structures, steps, functions, operations, activities, etc.

For example, in certain of the above-discussed embodiments, one or more modules are discrete logic circuits or programmable logic circuits configured and arranged for implementing these operations/activities, as may be carried out in the approaches shown in Figs. 1A and 2. In certain embodiments, such a programmable circuit is one or more computer circuits, including memory circuitry for storing and accessing a program to be executed as a set (or sets) of instructions (and/or to be used as configuration data to define how the programmable circuit is to perform), and an algorithm or process as described at FIG. 3 is used by the programmable circuit to perform the related steps, functions, operations, activities, *etc.* Depending on the application, the instructions (and/or configuration data) can be configured for implementation in logic circuitry, with the instructions (whether characterized in the form of object code, firmware or software) stored in and accessible from a memory (circuit). As another example, where the Specification may make reference to a "first [type of structure]", a "second [type of structure]", etc., where the [type of structure] might be replaced with terms such as ["circuit", "circuitry" and others], the adjectives "first" and "second" are not used to connote any description of the structure or to provide any substantive meaning; rather, such adjectives are merely used for English-language antecedence to differentiate one such similarly-named structure from another similarly-named structure (e.g., "first circuit configured to convert ..." is interpreted as "circuit configured to convert ...").

Based upon the above discussion and illustrations, those skilled in the art will readily recognize that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps such as the steps/activities associated with FIG. 3. Such modifications do not depart from the true spirit and scope of various aspects of the disclosure, including aspects set forth in the claims

**Claims**

1. A method comprising:

   operating a receiver, having single-photon avalanche photodiode, SPAD, circuitry for photon detection, with multiple photon detections using a plurality of time-to-digital converters, TDCs, being set to accumulate detected photon counts over relatively coarse time ranges;
   binning and identifying one or more possible target bins associated with the detected photon counts accumulated over the relatively coarse time ranges; and
   using the plurality of TDCs to accumulate detected photon counts over one or more relatively fine time ranges corresponding to the identified one or more possible target bins.

2. The method of claim 1, wherein operating the receiver is for Light Detection and Ranging, Lidar, detection of at least one object that is among said one or more possible target bins associated with said binning and identification, and further including operating the receiver is for more refined Lidar detection of said at

3. The method of claim 1 or 2, further including: accumulating detected photon counts in an array of bins in response to being detected; and operating the receiver for (Light Detection and Ranging, Lidar, detection of at least one object in an environment that causes at least one of the bins in said array of bins to be associated with said at least one object and at least one other of the bins in said array of bins to be associated with noise.

4. The method of claim 3, wherein said binning and identifying one or more possible target bins associated with the detected photon counts accumulated over the relatively coarse time ranges includes discarding or ignoring said at least one other of the bins in said array of bins to be associated with noise.

5. The method of any preceding claim, wherein said using the plurality of TDCs to accumulate detected photon counts over one or more relatively fine time ranges includes allocating the one or more relatively fine time ranges for plurality of TDCs selectively based on said binning and identifying one or more possible target bins associated with the detected photon counts accumulated over the relatively coarse time ranges.

6. The method of any preceding claim, wherein operating the receiver includes associated the plurality of TDCs with pixel groups covering a field of view, wherein each of the pixel groups is coupled to a bank of the plurality of TDCs to mitigate or prevent a blind spot in the field of view.

7. The method of any preceding claim, further including storing data associated with the detected photon counts as accumulated over the relatively coarse time ranges, in a coarse histogram and filtering to identify a possibly changing bin among the one or more possible target bins, and optionally operating the receiver includes updating the coarse histogram in real time.

8. The method of any preceding claim 1, further including at least one of a) using the receiver to detect jamming, and b) discriminating among the detected photons to mitigate or prevent an overload of detected photons being processed by the plurality of TDCs and/or circuitry used for binning and identifying.

9. An apparatus comprising:

a receiver, having single-photon avalanche photodiode, SPAD, circuitry, for photon detection, with multiple photon detections using a plurality of TDCs (time-to-digital converters) and counters being set or configured to accumulate detected photon counts over relatively coarse time ranges;

circuitry, including data-processing logic circuitry and a data storage circuit, configured for binning and identifying one or more possible target bins associated with the detected photon counts accumulated over the relatively coarse time ranges; and

using the plurality of TDCs to accumulate detected photon counts over one or more relatively fine time ranges corresponding to the identified one or more possible target bins.

10. The apparatus of claim 9, further including circuitry configured for Light Detection and Ranging, Lidar, detection of at least one object that is among said one or more possible target bins associated with said binning and identification, and further including circuitry for more refined Lidar detection of said at least one object.

11. The apparatus of claim 9 or 10, further including memory circuitry to accumulate detected photon counts in an array of bins, and circuitry for Lidar (Light Detection and Ranging) detection of at least one object in an environment that causes at least one of the bins in said array of bins to be associated with said at least one object and at least one other of the bins in said array of bins to be associated with noise.

12. The apparatus of any of claims 9 to 11, **characterized in that** during operation the plurality of TDCs are used to accumulate detected photon counts over one or more relatively fine time ranges in order to allocate the one or more relatively fine time ranges for the plurality of TDCs.

13. The apparatus of claims 9 to 12, wherein the receiver is to associate the plurality of TDCs with pixel groups covering a field of view, wherein each of the pixel groups is coupled to a bank of the plurality of TDCs to mitigate or prevent a blind spot in the field of view.

14. The apparatus of claims 9 to 13, further including logic circuitry to discriminate among the detected photons before using the plurality of TDCs to mitigate or prevent an overload of detected photons being processed by the receiver.

15. The apparatus of claims 9 to 14, further including logic circuitry to discriminate among the detected photons to mitigate or prevent an overload of detected photons being processed by the plurality of TDCs and/or circuitry to bin and identify.

**150** Accumulate Coarse Histogram

**155** Identify Targets

**160** Reassign TDCs for Fine Histogram

**FIG. 1B**

**120** Incident Photons

**116** TX lens

**114** Illuminator (e.g. laser)

**112** Driver

**125** Optical Frontend

**110** Signal Processing Circuitry

I/O

Out

**FIG. 1A**

**FIG. 2**

**FIG. 3**

**FIG. 4A**

EP 3 974 865 A1

FIG. 4C

FIG. 4B

FIG. 5A

FIG. 5B

EP 3 974 865 A1

FIG. 5C

EP 3 974 865 A1

Europäisches
Patentamt

European
Patent Office

Office européen
des brevets

# EUROPEAN SEARCH REPORT

**Application Number**

**EP 21 19 6352**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/052065 A1 (SHARMA ANUP K [US] ET AL) 23 February 2017 (2017-02-23) | 1-3,5-15 | INV. G01S7/4861 |
| A | * paragraphs [0002], [0019], [0021], [0025], [0034], [0046]; claims 1,6,7,8; figures 1,2,6 * | 4 | |
| | ----- | | |
| X | US 2020/233066 A1 (KULESH MAXIM [DE] ET AL) 23 July 2020 (2020-07-23) | 1-5, 7-12,14, 15 | |
| A | * paragraphs [0001], [0003], [0011], [0028]; figures 1,2 * | 6,13 | |
| | ----- | | |

**TECHNICAL FIELDS SEARCHED (IPC)**

**G01S**

The present search report has been drawn up for all claims

| Place of search | Date of completion of the search | Examiner |
|---|---|---|
| Munich | 17 February 2022 | Riccio, Ettore |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 19 6352

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2022

| Patent document cited in search report | Publication date | Patent family member(s) | Publication date |
|---|---|---|---|
| US 2017052065 A1 | 23-02-2017 | US 2017052065 A1<br>US 2020158837 A1 | 23-02-2017<br>21-05-2020 |
| US 2020233066 A1 | 23-07-2020 | CN 111538020 A<br>EP 3690475 A1<br>US 2020233066 A1 | 14-08-2020<br>05-08-2020<br>23-07-2020 |

For more details about this annex : see Official Journal of the European Patent Office, No. 12/82